# EUROPEAN PATENT APPLICATION

(11) **EP 1 571 566 A2**
(43) Date of publication of application: **07.09.2005**
(21) Application number: 05251258.9
(22) Date of filing: 02.03.2005
(51) Int. Cl.: G06F 17/30

(54) **Hierarchical database apparatus, components selection method in hierarchical database, and components selection program**

(30) Priority: 02.03.2004 JP 2004058067
(71) Applicant: KABUSHIKI KAISHA TOSHIBA, Tokyo 105-8001 (JP)
(72) Inventor: Noriko, Minamino, c/o Toshiba Corporation, IPD, Tokyo 105-8001 (JP); Hiroshi, Murayama, c/o Toshiba Corporation, IPD, Tokyo 105-8001 (JP)
(74) Representative: Granleese, Rhian Jane

(57) **Abstract**

A database apparatus stores a first contents table which includes first components including first contents data rows, and a second contents table which includes second components including second contents data rows. The first and second contents data rows each have a selection reference relationship between the first and second contents tables, and a selection reference condition is described using a selection reference type property. A selection reference processor is configured to query the second contents table under the selection reference condition to find candidates of second contents data rows. The candidates are referenced from a selected first contents data row according to the selection reference relationship. At least one second contents data row designated in the candidates displayed on the screen is selected. A combination device is configured to generate a combined contents table corresponding to a combined-type product, by combining the first and second contents data rows.

## Description

The present invention relates to a hierarchical database apparatus which stores specification information and catalogue information of industrial products in the form of a hierarchical database, a components selection method in the hierarchical database, and components selection program.

In recent years, a technique that forms an advanced database of information of industrial products using a computer and setting such a database before a query process via a communication network has been provided. Databases such as an object-oriented database (OODB) and an object-relational database (ORDB), which have a hierarchical structure that allows a subclass to inherit the properties of a superclass have a structure in which properties increase progressively by inheritance in subclasses. Such a mechanism that allows a subclass to inherit the properties of a superclass is normally called "inheritance". As for inheritance, please refer to Object-Oriented Concepts, Databases, and Applications, Edited by Won Kim, 1989, ACM Press, which is incorporated herein by reference.

In the technical field associated with object-oriented databases, classifications in a hierarchy are normally called "classes". On the other hand, in an object-relational database (ORDB), a table that allows inheritance corresponds to a class. Among tables in a hierarchy, lower tables inherit properties from upper tables. A property to be inherited corresponds to header information of each column. Note that both the object-oriented database (OODB) and object-relational database (ORDB) will be generally referred to as a "hierarchical database". A set (table) of data which belong to a class of each layer and have an identical property type will be referred to as "instance", and a set of such "instances" will be referred to as a "population" hereinafter.

Upon constructing an information database of industrial products, utilizing such a hierarchical database technique, industrial products can be roughly categorized into integrated-type products and combined-type products in terms of shapes of objects as they are provided to end users via transactions such as sales. An integrated-type product is a product formed by integrating components which are not distinguished to implement a function. An integrated-type product is given only one model number that can uniquely identify that product from other products. In contrast, a combined-type product is formed by combining components (i.e., parts) with independent model numbers so as to implement a function. Most components of a combined-type product serve their purposes only after they are combined with other components.

In consideration of the same properties used to express products, both the product information providing side (supplier) and receiving side (user) want to handle products irrespective of whether they are integrated-type or combined-type products. Conventionally, in a description of combined-type products upon forming a database, all combinations of components are expanded. As a result, all combinations of products can be covered, and a query process is allowed without distinguishing integrated and combined-types. In addition, the supplier need not describe any complicated parts configurations.

However, expanding and describing all combinations of components (parts) in advance may result in an explosive increase in the number of products. This problem becomes more pronounced as components grow in variety (number of properties) or become large in number (possibility of property values). In database management, products to be actually accessed among such a huge number of combinations are often limited and fixed. In such a case, the remaining product information is effective as information that expresses the possibility of a combination, but it is merely information that expresses a specification value. Hence, the necessity of setting such information as a product table before a query process is low.

The present invention is directed to provide a hierarchical database apparatus which can efficiently form a database of combined-type products, and allows easy selection of components for specifying combined-type products, a components selection method in the hierarchical database, and a components selection program.

A hierarchical database apparatus according to one aspect of the present invention comprises a table storage to store a first contents table which includes a plurality of first components which includes a plurality of first contents data rows, and a second contents table which includes a plurality of second components which includes a plurality of second contents data rows, wherein the first contents data rows and the second contents data rows each have a selection reference relationship between the first contents table and the second contents table, and a selection reference condition is described using a selection reference type property; a display device to display the first contents table on a screen; a designation device to designate a first contents data row in the first contents table displayed on the screen; a first selection device configured to select the designated first contents data row; a selection reference processor configured to query the second contents table under the selection reference condition to find candidates of second contents data rows, wherein the candidates are referenced from the selected first contents data row according to the selection reference relationship; a second selection device configured to select at least one second contents data row designated by the designation device in the candidates displayed on the screen; and a combination device configured to generate a combined contents table corresponding to a combined-type product, by combining the first and second contents data rows.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a block diagram showing a hierarchical database system according to an embodiment of the present invention;
FIG. 2 is a view showing an example that expresses contents data using contents tables;
FIG. 3 is a view showing details of properties of an electromagnetic flowmeter (C03);
FIG. 4 is a view showing groups of properties of classes;
FIG. 5 shows an example of an assist window used upon creating a contents table;
FIG. 6 is a view showing a reference relationship among contents tables;
FIG. 7 shows an example of a selection path instruction file;
FIG. 8 shows a selection path in a selection tree format;
FIG. 9 is a flowchart showing an overview of a components selection sequence of combined-type products;
FIG. 10 is a flowchart showing an example of the detailed sequence of a selection process;
FIG. 11 is a flowchart showing another example of the detailed sequence of a selection process;
FIG. 12 is a flowchart showing still another example of the detailed sequence of a selection process;
FIG. 13 shows leaves in selection paths;
FIG. 14 shows an example of a selection path selection function window;
FIG. 15 shows an example of the storage contents of a selection contents storage unit;
FIG. 16 shows a save example of selection paths in a selection path storage unit;
FIG. 17 is a view showing selected contents and their combination example;
FIG. 18 is a view showing a solution of table designation;
FIG. 19 shows an example of a reference result when a selection path is defined by a selection acyclic graph;
FIG. 20 shows an example of a definition file of a selection path when the selection path is defined by a selection acyclic graph;
FIG. 21 shows an example of importing properties from other classes using the concept of CaseOf in PLIB;
FIG. 22 shows an example of properties assigned Classification label;
FIG. 23 shows a structure for additionally assigning ClassificationName using another table;
FIG. 24 shows an example of Classification_label information expressed using TABLE_CONTENT entities;
FIG. 25 shows an example of a spreadsheet that summarizes sets of all properties;
FIG. 26 shows a window example used to input query conditions of product data, i.e., a display example in which input cells are separated by the one-dashed chain lines for divided properties of properties;
FIG. 27 shows a case wherein from which row of a parent node a reference result row is referred to is indicated by a row number (reference source row number) of the parent node;
FIG. 28 shows an example wherein pages are separately displayed depending on from which row of a parent node a reference result row is referred to;
FIG. 29 shows a guide example using a guide chart;
FIG. 30 shows another guide example using a guide chart; and
FIG. 31 shows an example of a reference relationship among classes.

Embodiments of the present invention will be described below with reference to the accompanying drawings.

An embodiment of the present invention implements, e.g., a database of industrial product information through the use of a hierarchical database which allows subclasses to inherit properties of superclasses, and has one or a plurality of tables which are described for one class using some or all of the properties. When a class of a hierarchical database has only one table as a structure for storing instances or when a plurality of tables are independent from each other if they are available, respective rows of each table correspond to instances of a class. On the other hand, when data of a given class are separately described in a plurality of tables, the population of a class is expressed by a combined table obtained as a result of a product (JOIN) operation such as internal join, external join, Cartesian product, and each row of the combined table corresponds to an instance of an actual class, one row of a source table merely gives a set of property values for a partial set of all properties which form the instance. In this case, each individual table is called a "divided property table", and a set of properties described in the divided property table are called "divided properties" or "property segments". The divided property table can be obtained by classifying properties of that class into a plurality of sets of properties which do not include common property types except for a key property, and associating tables to respective property sets.

In the embodiment of the present invention, a hierarchical database of product information holds combined-type products (parts) as parts tables (instance groups) created in the same class as integrated-type products. A selection sequence that forms, e.g., a tree structure is defined in advance on the basis of the reference relationship among the parts tables (among parts). According to this selection sequence, parts reference is made in turn from a start part (a core portion of a combined-type product), and one part is narrowed down (selected) in each parts table. The parts tables that have undergone such selection are combined to create a combined-type product table. The created combined-type product table represents a practical combination among parts based on selection. The embodiment will be explained hereinafter using terms "contents data" and "contents table" according to a practical system. The "contents data (row)" is synonymous with an instance, and the "contents table" is synonymous with a divided property table. The components selection sequence will be explained using these terms. At least one contents data row is selected from a contents table as a start point. In this case, contents data rows that meet reference conditions are narrowed down from a contents table as a reference destination on the basis of the reference relationship among contents tables, and contents data row is further selected from a reference result contents data set (rows) obtained as a result of this process. Then, this sequence is repeated, and finally selected contents data rows are combined.

The selection sequence of combined-type products according to the present invention follows a "selection path" that specifies how to trace contents tables for respective components. The contents tables which form the selection path will be referred to as selection nodes or simply as nodes. The selection path includes a type which makes reference to a given selection node from only one selection node, and a type that makes reference from a plurality of selection nodes. In this specification, the former type will be referred to as a "selection tree", and the latter type will be referred to as a "selection acyclic graph". The selection path can be included in reference relationship paths if the reference relationship among contents data is expressed by paths, but they do not always match.

In ISO 13584 Parts Library (PLIB) that defines one data model of hierarchical database type, a classinstance type is available as a data type that expresses the reference relationship among tables. In the following description of this embodiment, this classinstance type is used for describing the reference relationship among contents data. When properties of a given class are defined by the classinstance type, and refer to contents data (instances) of another class, a reference condition which is exclusively used in selection in this embodiment can be described as property values defined by the classinstance type. That is, since not only the reference relationship for selection is expressed using the classinstance type, a classinstance type especially for selection is defined as a selection classinstance type, and is handled as an extension of the normal classinstance type. The selection classinstance type will also be referred to as a selection reference type. The reference condition is defined in at least the property of a dictionary, and specifies a class of a reference destination. Furthermore, each contents data can designate (re-define) a reference partner class and a plurality of sets of properties and property values. However, the reference partner class re-designated by each contents data must be a subclass (including itself) of the reference partner class defined by the property of the dictionary.

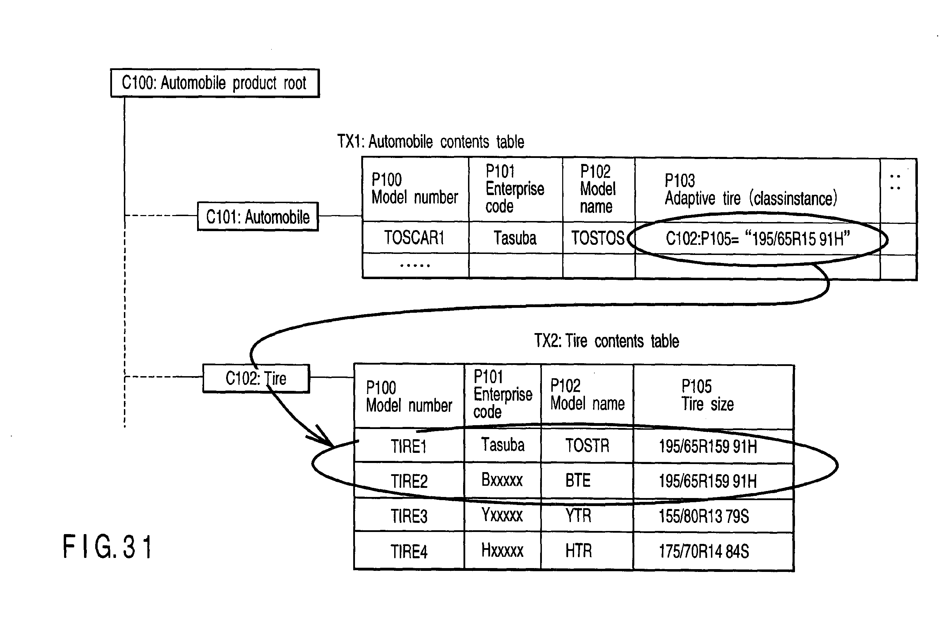

FIG. 31 shows an example of the reference relationship among classes. The relationship among classes has a hierarchical relationship. A dictionary tree starting from C100: automobile product root includes product classifications (classes), i.e., C101: automobile, and C102: tire, which respectively have a contents table TX1: automobile contents table, and TX2: tire contents table. TX1: automobile contents table has classinstance type property P103: adaptive tire in addition to properties such as P100: model number, P101: enterprise code, P102: model name, and the like. Property P103: adaptive tire defines class reference to C102: tire in the dictionary tree. If contents data of the automobile contents table does not designate any detailed condition, all contents data included in C102: tire are to be referred to. In this example, the value of contents data P103 in the first row of TX1 describes class C102 as a reference destination, and condition P105 = "195/65R159 91H" of contents included in the class as the reference destination. As a result, contents data to be referred to are data in the first and second rows of TX2.

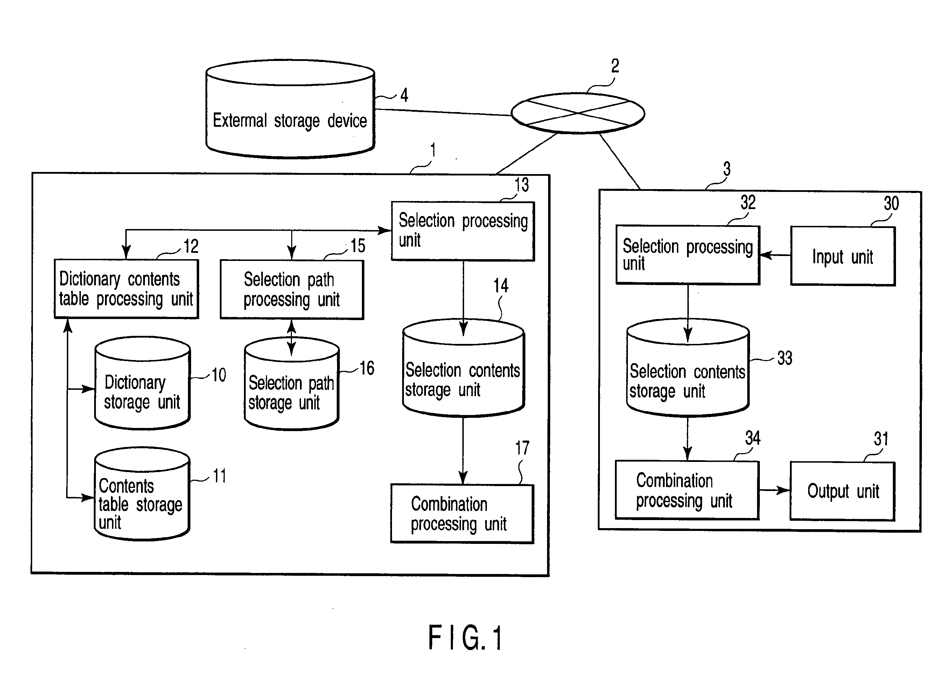

FIG. 1 is a block diagram showing a hierarchical database system according to an embodiment of the present invention. This system includes a server 1, a client 3 which is connected to the server 1 via a network 2, and an external storage device 4 connected to the network 2. The network 2 is, e.g., the Internet, and this system is a Web-based system via the Internet. Note that the present invention is not limited to such a Web-based client-server system.

The client 3 comprises an input unit 30 including a mouse, keyboard, and an output unit 31 including a display, and is configured using a general-purpose computer. The client 3 outputs data received from the server 1 to the output unit 31 via a GUI, or receives data and commands input from the user via the input unit 30 via the GUI and transmits them to the server 1. The client 3 of this embodiment has a selection processing unit 32, selection contents storage unit 33, and combination processing unit 34 as functional units required to access a hierarchical database built in the server 1 and to implement the selection sequence of product information according to the present invention. These processing units cooperate with corresponding processing units in the server 1.

The server 1 comprises an input unit and output unit coupled to a GUI as in the client 3, and can be configured using a general-purpose computer. The server 1 comprises a dictionary storage unit 10 that stores a dictionary as a database of class classifications and properties that form class classifications, a contents table storage unit 11 that stores sets of values of properties of individual classes, i.e., contents data (instances) in the form of tables, and a dictionary contents table processing unit 12 that is coupled to these dictionary storage unit 10 and contents table storage unit 11 and manages execution of a data input/output process, query process. Data of the dictionary stored in the dictionary storage unit 10, data of contents tables and the like are stored in a predetermined file format in the external storage device 4. The external storage device 4 is connected to the server 1 via the network 2, as shown in FIG. 1, but may be connected to the server 1 without going through the network 2.

The server 1 comprises a selection processing unit 13, selection contents storage unit 14, selection path processing unit 15, selection path storage unit 16, and combination processing unit 17 as functional units required to implementing the selection sequence of product information according to the present invention. The selection processing unit 13 acquires selection path information from the selection path storage unit 16, and presents a selection sequence to the user based on the selection path information. The selection processing unit 13 stores contents data which are selected by the user according to the selection sequence in the selection contents storage unit 14. The selection path processing unit 15 controls, e.g., an assist window required to create a selection path, or analyzes a selection path input in the form of a file, and stores it in the selection path storage unit 16. The combination processing unit 17 combines contents data stored in the selection contents storage unit 14 in accordance with an instruction from the user. These functional units of the server 1 can be implemented as a computer program.

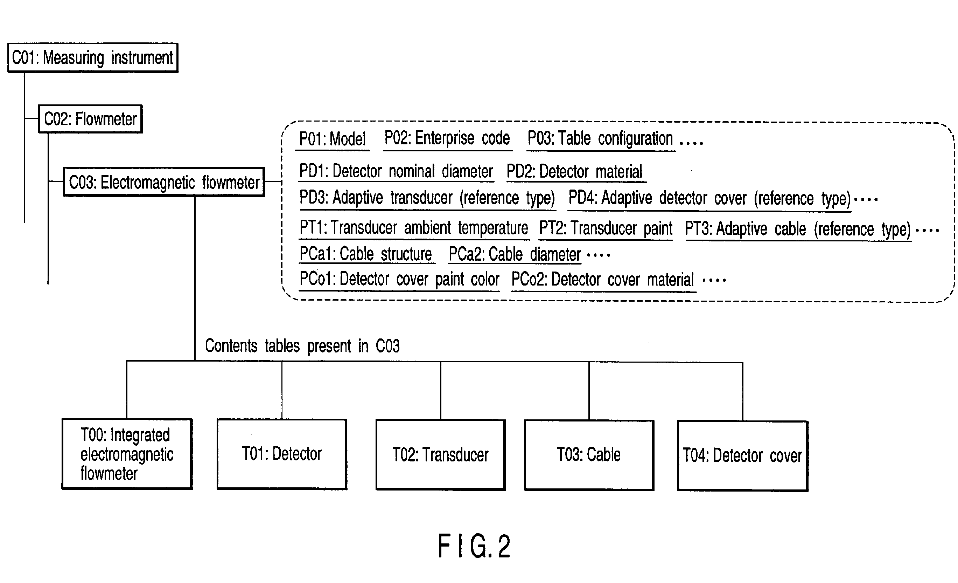

FIG. 2 shows an example that expresses contents data of class C03: electromagnetic flowmeter using contents tables. An electromagnetic flowmeter has "T01: detector", T02: transducer", "T03: cable", and "T04: detector cover" as components of a combined-type product. In the case of an integrated-type product which corresponds to T00: integrated-type electromagnetic flowmeter in this example, components are handled not as products but as parts of a product. However, in case of a combined-type product, components themselves can be products.

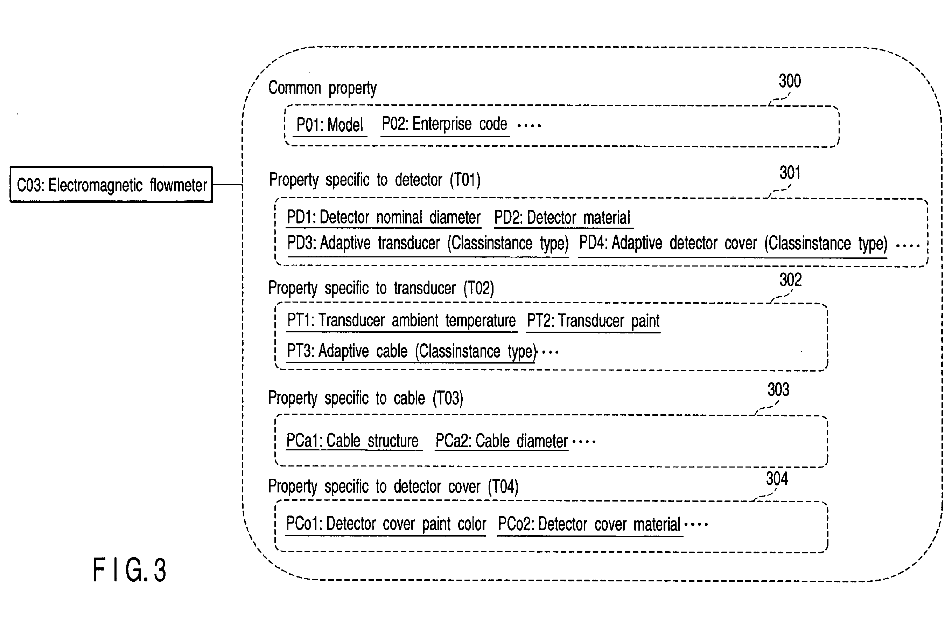

FIG. 3 shows properties of the electromagnetic flowmeter (C03). Properties used in a contents table that describes an electromagnetic flowmeter as an integrated-type product are all of a common property, property specific to detector, property specific to transducer, property specific to cable, and property specific to detector cover. In this embodiment that handles combined-type products, the properties of the electromagnetic flowmeter are categorized into a plurality of property sets (property segments) which do not include any common property type except for a key property, and these property sets are associated with tables, thus preparing for contents tables for respective components (parts). For example, a contents table of detector has a common property 300 and property 301 specific to detector. A contents table of transducer has the common property 300 and a property 302 specific to transducer. In this way, contents tables are prepared using the common property and those which are specific to respective components. A reference relationship is defined among these components (parts). In the components selection sequence to be described later, a plurality of contents tables are referred to along the reference relationship, and a combination of components can be easily acquired.

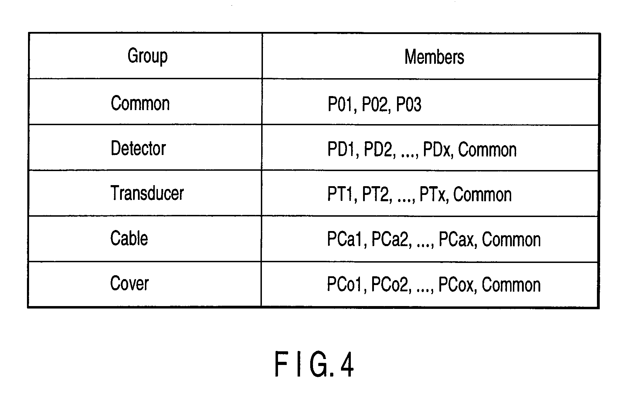

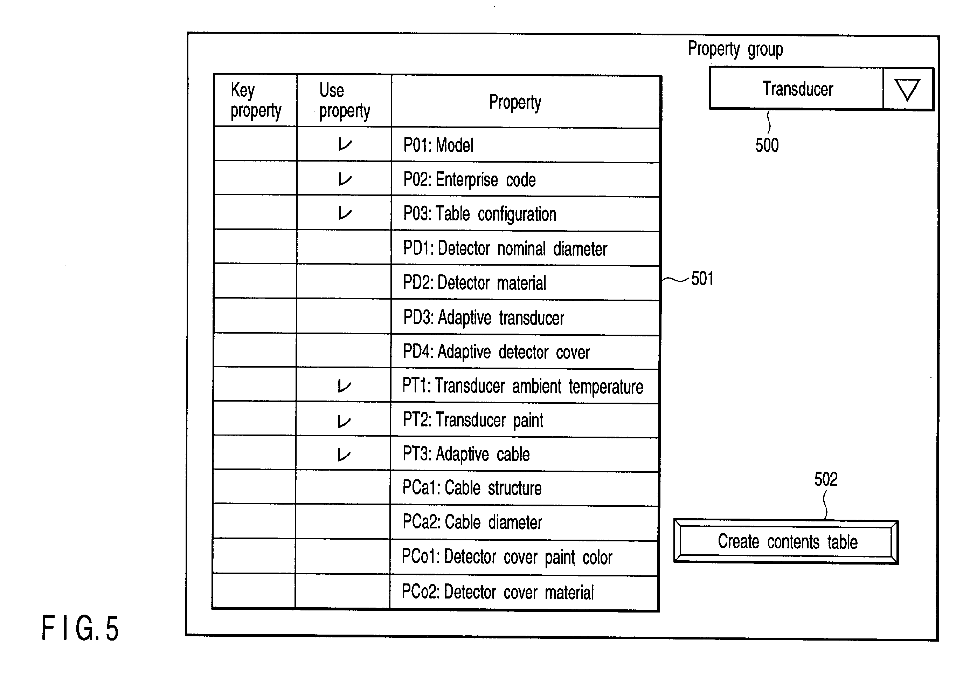

Note that the properties of the class are grouped, as shown in FIG. 4. These property groups correspond to the contents tables, i.e., components. Upon creating a contents table, a creation assist window shown in FIG. 5 is effective. On this creation assist window, a property group can be designated using a pull-down menu 500, and properties used in the contents table can be quickly designated using check buttons on a list window 501. When the user clicks a contents table creation button 502 upon completion of edit, a new contents table is created.

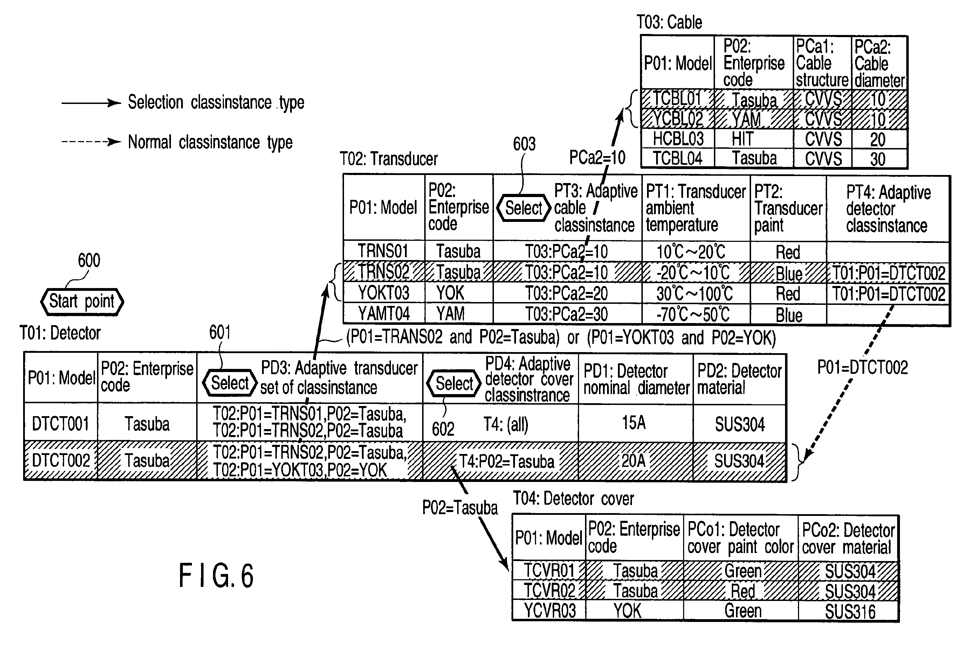

FIG. 6 shows the reference relationship among contents tables. As can be seen from FIG. 6, a reference from T01: detector to T02: transducer, reference from T02: transducer to T03: cable, reference from T01: detector to T04: detector cover are depicted by the solid line arrows. Also, a reference from T02: transducer to T01: detector is depicted by the dotted line arrow. This is the reference of normal classinstance type, and is different from the above three references (selection references to be described later). Note that the reference among contents tables may be made not only among the tables which belong to an identical class, but also among contents tables which belong to other classes.

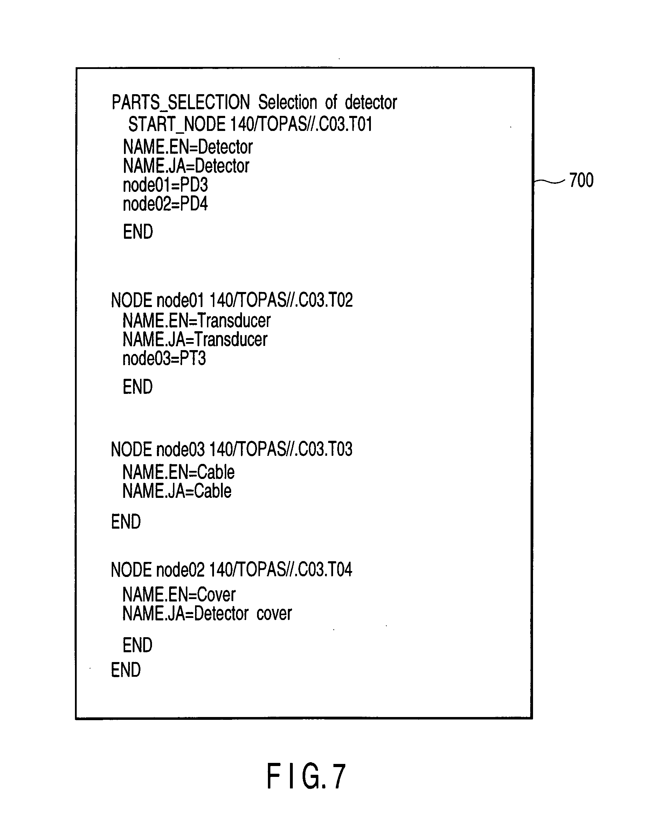

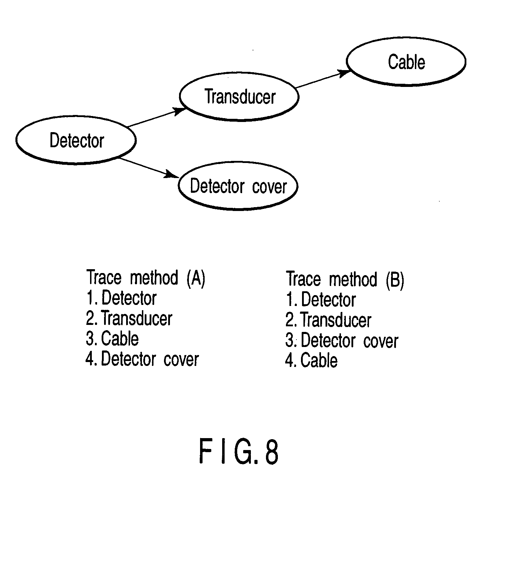

In addition to the aforementioned reference relationship, the aforementioned selection path is defined in advance to be included in the reference relationship. A plurality of selection paths may be present for an identical contents table. In the example shown in FIG. 6, the arrows depicted by the solid lines correspond to selection paths. The selection path is extracted from the reference relationship but it must be extracted not to reference to the self contents table, i.e., to form a tree structure. The definition of the selection path is stored as a selection path instruction file shown in, e.g., FIG. 7 in the selection path storage unit 16. As can be seen from FIG. 7, a selection path instruction file 700 is defined by a node list of the selection path including a start point node, and the definition of the selection path includes a description of the reference relationship between nodes (e.g., a description node01=PD3, node02=PD4 in the start point node). FIG. 8 exemplifies a selection path in a selection tree format. When the selection path has the aforementioned selection tree format, selected results remain the same independently of the methods of tracing the selection path as long as a principle "a child node is selected after a parent node is selected" is satisfied. That is, if the reference relationship shown in FIG. 8 is provided, if contents data are selected by tracing the selection nodes by method (A) or (B), selection results are not influenced since no interference occurs among selection nodes.

Note that contents data may be stored in different (product) classes. Also, reference among contents tables in components selection may be made across different classes.

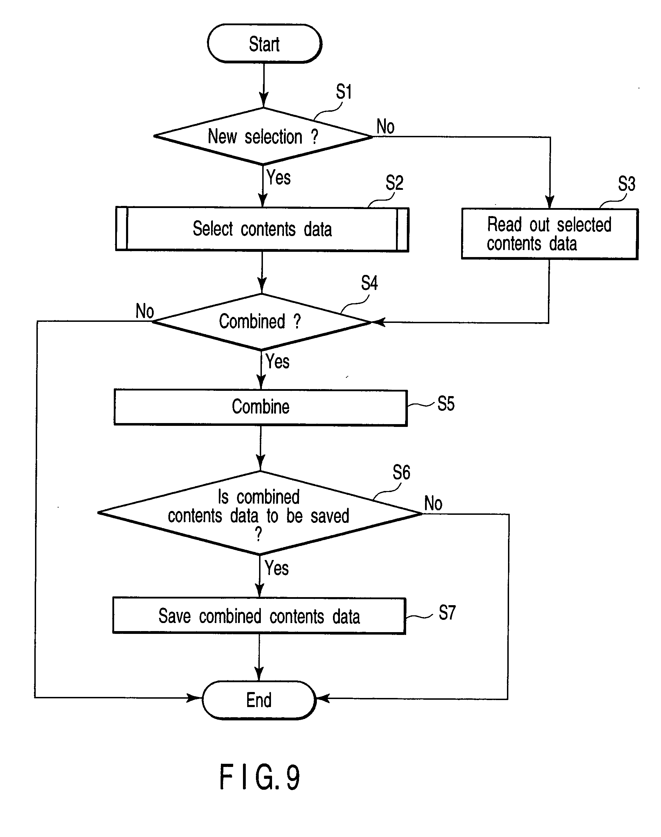

A components selection sequence of combined-type products in the hierarchical database system according to this embodiment will be described below. FIG. 9 is a flowchart showing an overview of the processing sequence.
(Step S1) The control inquires of the user as to whether new selection is to be started (new selection) or selection contents data which have already been selected and saved are used. If new selection is to be made, the flow advances to step S2; if the saved selection contents data are used, the flow advances to step S3.
(Step S2) A selection path is presented, and the control makes the user select contents data according to the selection path.
(Step S3) The saved selection contents data are read out.
(Step S4) The control inquires of the user if the selected contents data are to be combined. If a combination instruction is input, the flow advances to step S5; otherwise, the process ends without combining data.
(Step S5) The selected contents data are combined according to a combination condition.
(Step S6) The control inquires of the user as to whether or not the combined selection contents data is to be saved. If a save instruction is input, the flow advances to step S7; otherwise, the process ends.
(Step S7) The combined contents data is saved. This contents data is output from the output unit 31 of the client 3 in accordance with a request.

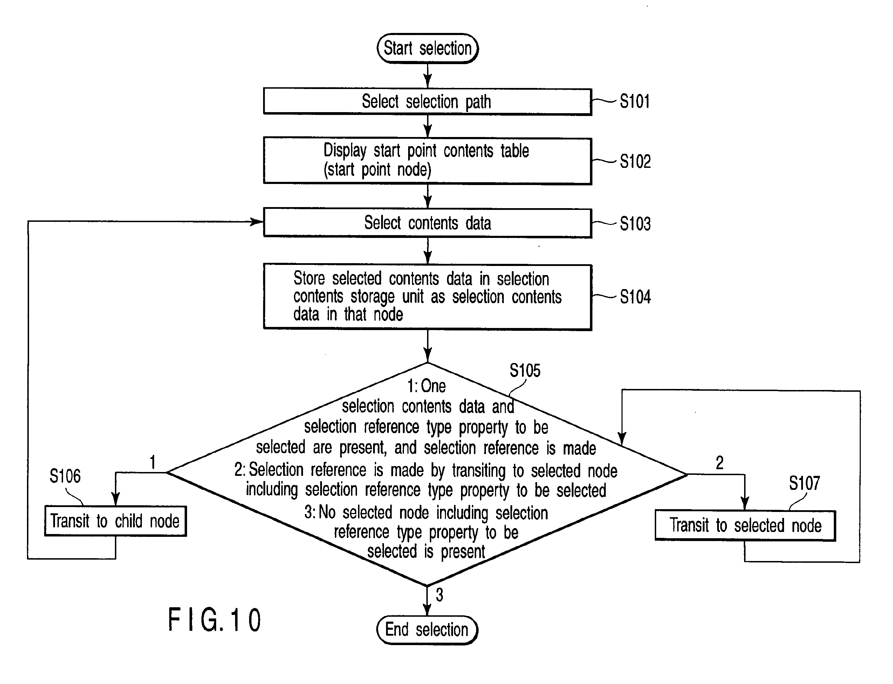

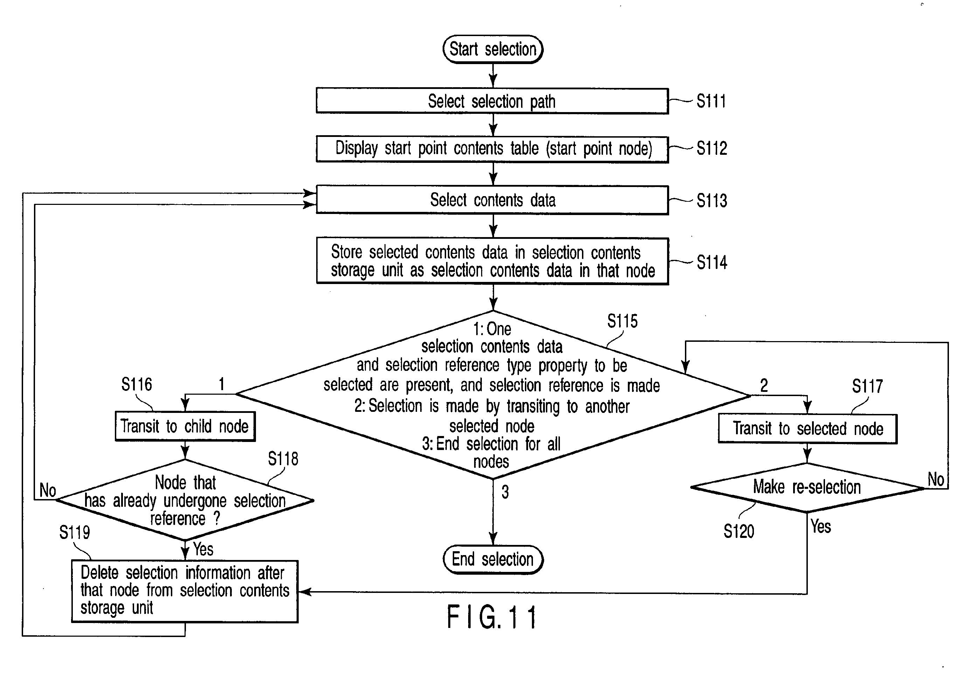

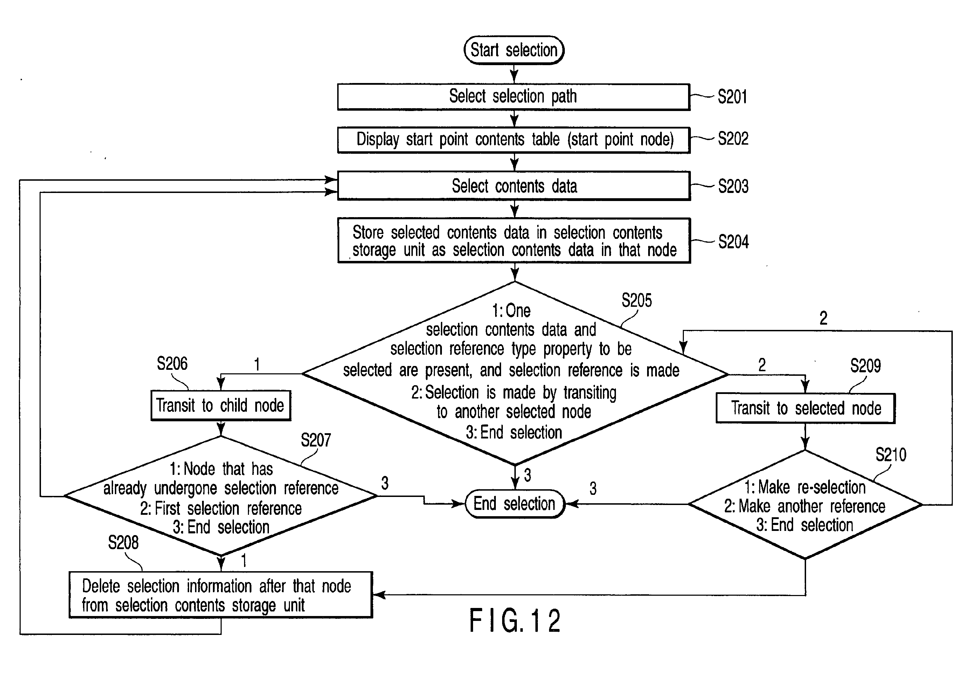

FIGS. 10 to 12 are flowcharts showing some detailed sequence examples of the contents data selection process in step S2 in FIG. 9. FIG. 10 shows a sequence example in which re-selection of selection contents data is not assumed, and selection is to end only when selection for all nodes is completed. FIG. 11 shows a sequence example that assumes re-selection of selection contents data. In this case, information of old selection contents data and selection information at nodes after that node must be cleared to prevent any conflict. The flowchart in FIG. 11 shows a case wherein selection is to end only when selection for all nodes is completed, as in FIG. 10. FIG. 12 shows a case wherein re-selection of selection contents data is assumed, and selection is to end even before selection for all selection nodes is completed. In this case, since selection is not completed for all selection nodes, i.e., components of a product, contents data to be combined include a deficit, but it does not pose any problem.

The selection process sequence shown in FIG. 10 has step S101 of selecting a selection path, step S102 of displaying a start point contents table (start point node), step S103 of selecting contents data, and step S104 of storing selected contents data as selection contents data of that node in the selection contents storage unit 14. Also, the sequence has step S105 of checking whether a selection reference is to be made and whether the selection process is to end. If the number of selection contents data is one, and there are selection reference type properties to be selected in step S105, the control transits to a child node to make a selection reference (step S106). If there are selection reference type properties to be selected, the control may transit to the selected node to make a selection reference (step S107). If there is no selected node including selection properties to be selected, the selection processing sequence ends.

The selection processing sequence shown in FIG. 11 has step S111 of selecting a selection path, step S112 of displaying a start point contents table (start point node), step S113 of selecting contents data, and step S114 of storing selection contents data as selection contents data of that node in the selection contents storage unit 14. Also, the sequence has step S115 of checking whether a selection reference is to be made and whether the selection process is to end. If the number of selection contents data is one, and there are selection reference type properties to be selected in step S115, the control transits to a child node to make a selection reference (step S116). Also, the control may transit to another selected node to make a selection reference (step S117). If the control transits to a child node in step S116, it is checked whether that child node has already undergone selection (step S118). If that node has already undergone selection, selection information after that child node is deleted from the selection contents storage unit 14. On the other hand, if the control transits to the selected node in step S117, the control inquires of, e.g., the user whether or not re-selection is to be made in step S120. If re-selection is to be made, the flow advances to step S119; otherwise, the flow returns to step S115.

In either sequence, the selection process is executed under the following processing conditions:
- A child node must be selected after a parent node is selected.
- One contents data must be selected from each node. A plurality of selection contents data can be present in a node corresponding to a leaf in the selection result.

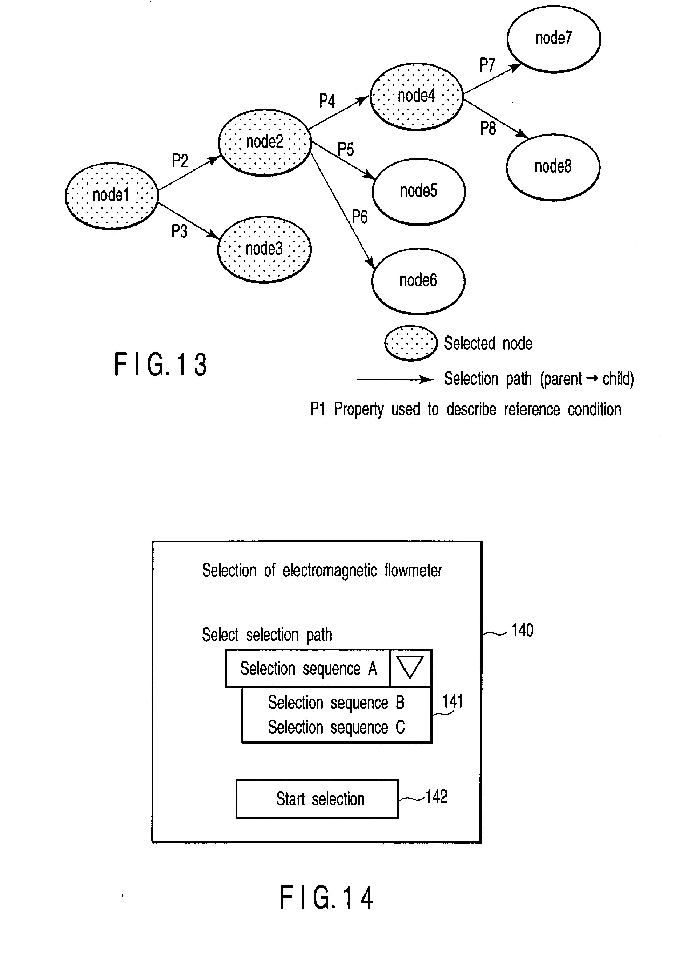

Note that "a node corresponding to a leaf in the selection result" means a node which has no child node when all nodes of the selection path have already been selected. On the other hand, "a node corresponding to a leaf in the selection path": means a node which has no child node of the selected nodes in the selection path. For example, in case of a selection path shown in FIG. 13, "leaves in the selection path" correspond to nodes 3, 5, 6, 7, and 8, and "leaves in the selection result" correspond to nodes 3 and 4.

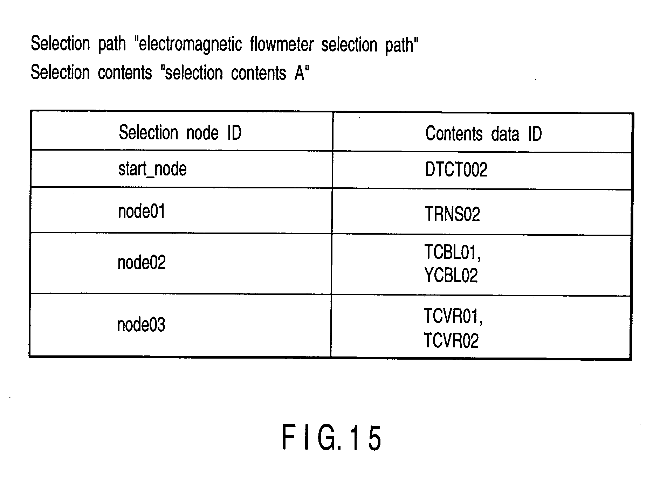

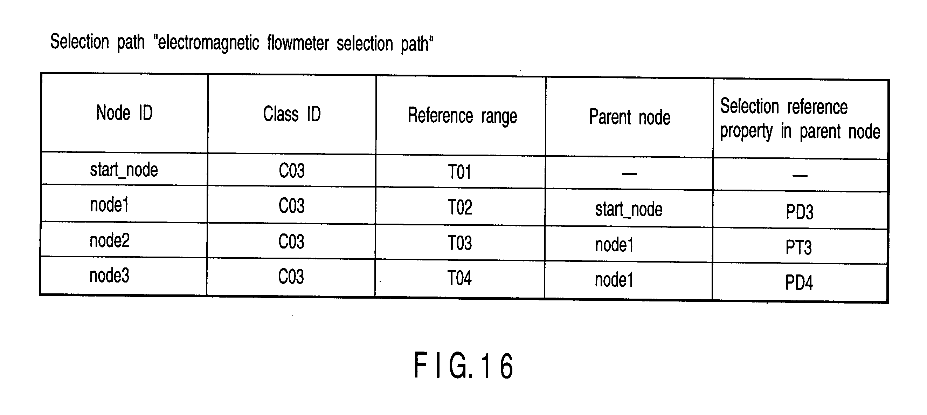

The detailed sequence of the selection process will be explained below with reference to FIG. 12.
(Step S201) The selection processing unit 13 of the server 1 presents a plurality of selection paths stored in the selection path storage unit 16 to the user via the client 3. The user selects a desired selection path via the input unit 30. The client 3 displays a selection path selection window 140 shown in, e.g., FIG. 14, via the output unit 31 under the control of the selection processing unit 32. The user selects one of selection paths from a pull-down menu 141. In this case, one of selection sequences A to C is selectable.
(Step S202) The selection processing unit 13 of the server 1 informs the dictionary contents table processing unit 12 to present a contents table serving as a start point to the user in accordance with the selection path selected by the user. The dictionary contents table processing unit 12 reads out a designated contents table. The readout contents table is displayed via the output unit 31 of the client 3. When the user clicks a selection start button 12 on the window 140 in FIG. 14, selection starts.
(Step S203) The user narrows down contents data by making a query process (component selection) from the contents table as the start point.
(Step S204) The selection processing unit 13 stores in the selection contents storage unit 14 the narrowed-down contents data as selection contents data of that node. For example, the selection contents storage unit 14 stores a selection node (ID) selection contents data (ID) in association with each other, as shown in, e.g., FIG. 15. On the other hand, FIG. 16 shows a save example of the selection path storage unit 16. A selection classinstance type property corresponds to a node.
(Step S205) It is checked whether a selection reference is to be made and if the selection process is to end. More specifically, if the selection contents data includes a selection reference type property, and the selection reference is to be continued for that selection reference type property, the flow advances to step S206. If selection in this selection node and subsequent nodes is to end or abort, and the control transits to another selection node to make selection, the flow advances to step S209. Or selection can end.
(Step S206) The control transits a child selection node with reference to the selection reference type property to display a reference result.
(Step S207) If the property that undergoes the selection reference has already been selected, the flow advances to step S208; if the property has not ever undergone the selection reference, the flow returns to step S203 to continue selection. In this step, selection may end.
(Step S208) If the property that undergoes the selection reference in step S207 has undergone the selection reference previously, since contents data is to be re-selected, the previous selection contents are deleted from the selection contents storage unit 14. Note that the selection contents after this child node are deleted if re-selection of contents data is designated in step S210.
(Step S209) The control shifts the selected selection node with reference to the selection reference type property.
(Step S210) If contents data is to be re-selected in the selected selection node, the flow advances to step S208. If the selection contents data is to be selected with reference to the selection reference type data or if the control transits to another selected selection node to make selection, the flow returns to step S205. Selection may end in this step.

Referring back to FIG. 6, a display image of contents data according to the selection flow is shown. When the user selects a selection path and clicks the selection start button on the window 140 shown in FIG. 14, a contents table "T01: detector" corresponding to a start point 600 is displayed. In this "T01: detector" contents table, for example, selection marks 601 are displayed for PD3 and PD4 which are registered in the selection path as data of selection classinstance type, so that they have a different display pattern from that of normal classinstance.

Assume that the user selects contents data DTCT002 in the second row of the "T01: detector" contents table as the start point. Next, the user double-clicks a property value cell of PD3 in the selected second row according to guide of the selection mark 601. As a result, a contents table "T02: transducer" according to the selection reference is displayed.

FIG. 6 shows contents data in all four rows of "T02: transducer". However, contents data to be actually displayed in the window are only those in the second row (TRNS02) and third row (YOKT03) that match the reference conditions described in the property value cell of PD3, i.e., "(P01=TRANS02 and P02=Tasuba) or (P01=YOKT03 and P02=Tasuba)".

The user then selects TRAN02 from two contents data presented as the reference results from T01: detector in this case, and makes a selection reference for property PT3 of selection classinstance type with a selection mark 603. As a result of this selection reference, only the first and second rows of the reference results of four rows of T03: cable are displayed in accordance with the selection reference conditions described in the property value of PT3 of TRNS02. Since T03: cable is a leaf, the user may narrow down the reference results to one data or may select all reference results in a plurality of rows as selected contents data.

Next, assume that the user makes a selection reference to PD4 of T01: detector which does not undergo a selection reference. As a result of this selection reference, only the first and second rows of the selection reference results of three rows of T04: detector cover are displayed. As in T03, since T04 is a leaf, the user may narrow down the selection reference results or may select all selection reference result contents data as selected contents data.

Since PT4 of T02: transducer is a property of normal classinstance type, if the user, e.g., double-clicks its property value, the T01: detector table as a reference destination is displayed, but is not determined as an object to be selected.

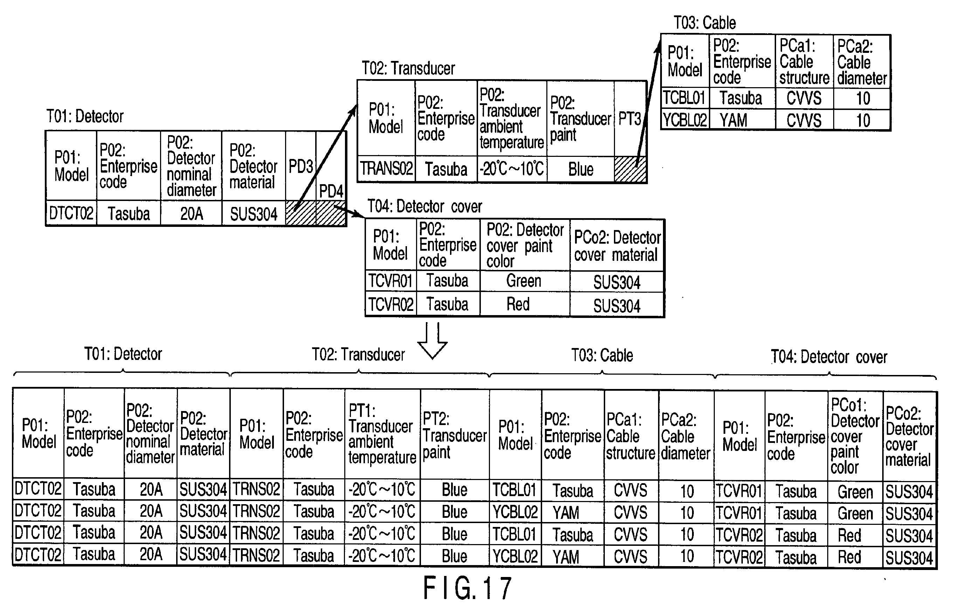

FIG. 17 shows selected contents data selected in the example of FIG. 6, and their combination example. Combined contents data is calculated as a direct product of all selected contents data.

### <Extension of data type classinstance type>

In the aforementioned embodiment, the user may select in two ways, i.e., from contents data present in the designated class and those which are present in all classes below the designated class.

### <Table designation method>

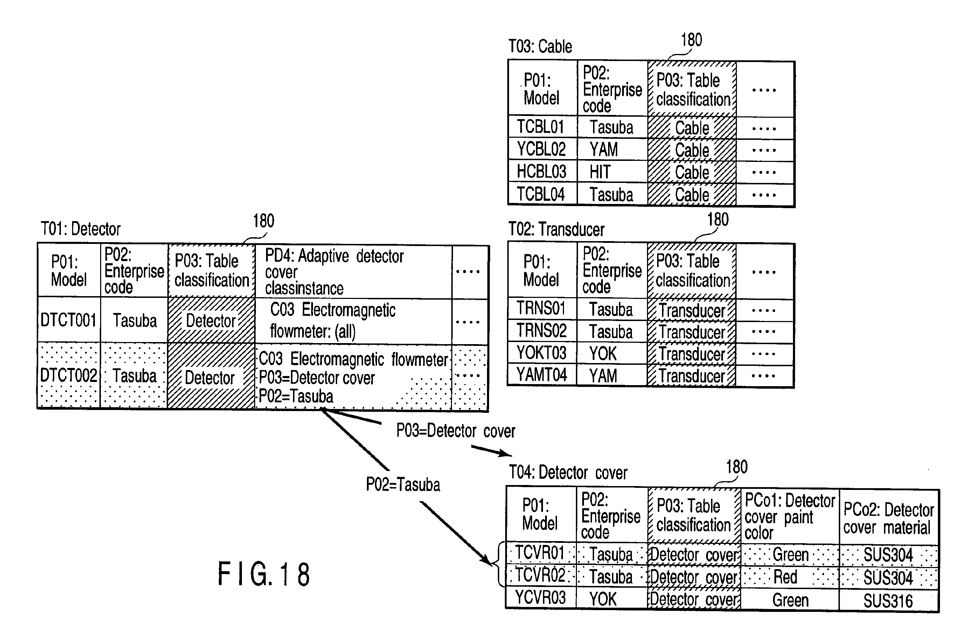

The classinstance type reference in PLIB can designate only a class, a property, and a value of that property. Hence, divided contents tables present in the identical class cannot be originally designated. To solve this problem, as shown in, e.g., FIG. 18, a property (table classification) 180 used to identify a table may be provided to all divided tables, and the value of this table classification may be used as a reference condition in a reference of classinstance type. As a result, a table to be referred to can be identified without giving any additional information other than PLIB. Table names may be given to the system as additional information.

According to the aforementioned embodiment of the present invention, since contents tables used to select combined-type products are allocated in the same class as in integrated-type products, a query process of combined-type products can be made without being distinguished from integrated-type products. Since components of each combined-type product are described in different contents tables, the total number of data can be greatly reduced. Since the sequence for selecting functions (components) one by one according to the selection path is selected, the user can easily select components to acquire information of the combined-type product.

### (Another Embodiment)

### <Reference solution in case of acyclic selection path>

In an embodiment that specifies the reference relationship using an acyclic graph structure, i.e., when the selection path is an acyclic graph, a plurality of nodes as selection reference sources are allowed to be present for a given node, and how to handle reference result contents data to be referred to from respective selection reference sources poses a problem.

Another embodiment processes reference result contents data to be referred to from a plurality of selection reference sources by specifying restrictions such as a difference set, sum of sets, or intersection to be taken in the selection path definition.

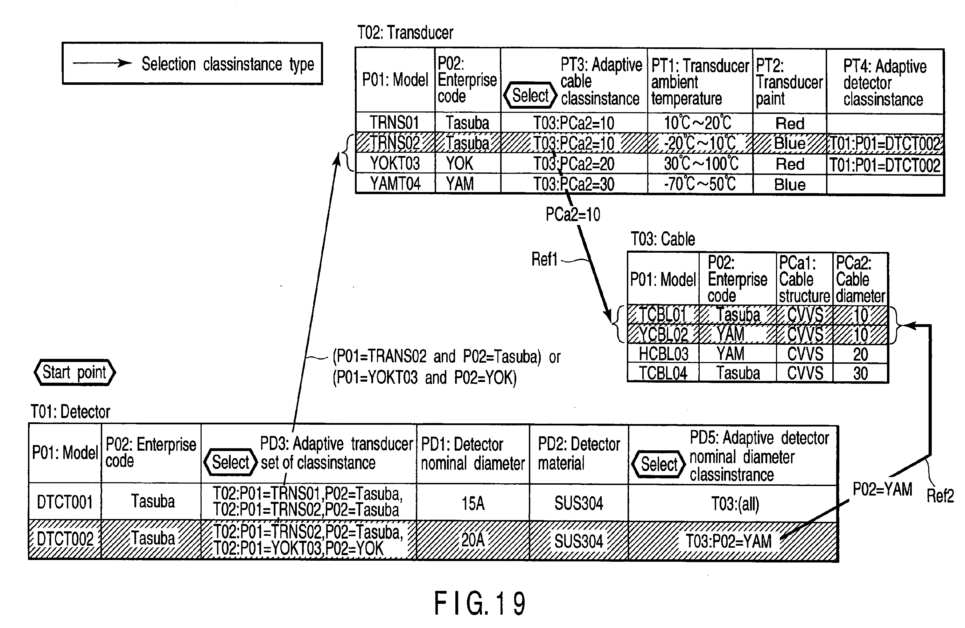

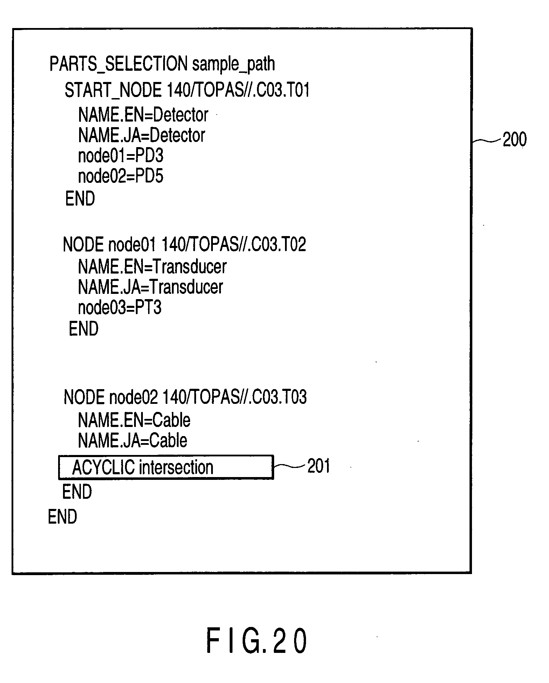

FIG. 19 shows an example of reference results when the selection path is defined by a selection acyclic graph, and FIG. 20 shows an example of a definition file of the selection path when the selection path is defined by a selection acyclic graph. In FIG. 19, a node which undergoes selection references from a plurality of nodes, as indicated by arrows Ref1 and Ref2, will be referred to as an acyclic node hereinafter. In this example, a contents table T03: cable corresponds to the acyclic node.

In the contents table T03, contents data as reference results from only T02 are P01: model number TCBL01 and YCBL02, and contents data as reference results from only T01 are P01: model number YCBL02 and HCBL03. In this case, according to a selection path definition file 200 shown in FIG. 20, since "ACYCLIC intersection" 201 is specified as handling upon reference from a plurality of nodes, an intersection of these results is calculated, and the reference result of T03 is only P01: model number YCBL02.

Since an acyclic node which has a plurality of selection reference source nodes uses all reference results from the plurality of selection reference source nodes, all selection nodes from the start point until that acyclic node must already be selected so as to derive reference result contents data.

### <Use of external standard code>

The embodiment of the present invention utilizes PLIB as a scheme for giving the hierarchical database format. In PLIB, identifiers called BSU codes are uniquely assigned to classes (product classifications) and properties (product properties). The BSU codes are also called external standard codes. By utilizing the BSU codes, classes and properties can be uniquely identified. For example, in FIG. 2, the BSU codes of classes correspond to C01, C02, ..., and those of properties correspond to P01, P02, ..., PD1, .... Note that the BSU codes may be converted into internal codes in the hierarchical database.

When the BSU codes are used not only to merely identify classes and properties in the hierarchical database but also to allow the user to confirm and display classes and properties, and input/output values, the system versatility preferably improves.

### <Property grouping using CaseOf>

In order to determine a property set required to form each contents table (divided property table), when a property is defined for each contents table as another class, and that property is imported using a CaseOf mechanism specified in the ISO 13584 Parts Library standard, it can be handled as a property for contents table definition. By setting a birth class of a property as one set, the property set to be set as a property of each contents table can be easily presented to the user or system.

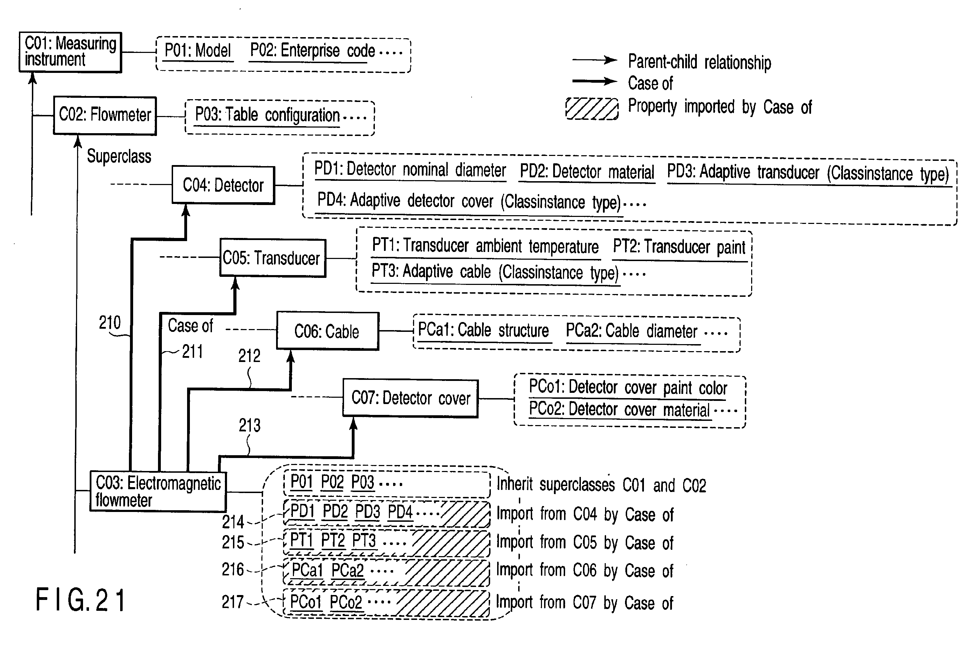

FIG. 21 shows an example wherein properties are imported from other classes by using the concept of CaseOf in PLIB in addition to a normal parent-child inheritance relationship. In this import example, C03: electromagnetic flowmeter imports properties that express respective features from C04: detector, C05: transducer, C06: cable, and C07: detector cover which are located at other positions of the hierarchical structure. Arrows 210 to 213 in FIG. 21 indicate CaseOf relationship among respective classes. Reference numerals 214 to 217 denote properties imported to C03: electromagnetic flowmeter.

In this way, when the components of the electromagnetic flowmeter are defined in advance as independent classes, and are imported, property grouping can be easily done and divided property tables can be created. When a class is formed for each function unit, a class query process for respective function units can also be made.

A class query process of an import destination (electromagnetic flowmeter in the example) can be made even from an import source (detector in the example). Hence, the query process can be made from the detector class, and divided property tables created for the electromagnetic flowmeter can undergo the query process. That is, both a sole detector present in the detector class and an electromagnetic flowmeter that incorporates a detector as a functional part can undergo the query process.

### <Extension of Classification_Label>

PLIB has a mechanism called Classification_Label, and can define classification codes of integers of properties for contents tables. By utilizing the classification codes, properties can be grouped in contents tables. However, since the classification codes are integers, they can group properties but cannot provide any meanings to groups themselves.

Hence, information that represents a name, meaning, relationship of classification codes, and the like corresponding to each classification code is added, and can be used in creation of divided property tables. Such additional information may be input using a GUI, file, or the like to the system of this embodiment. Normally, the PLIB dictionary is exchanged using an ISO 10303-21 file format (ISO 10303 Part21 file format; to be referred to as a Part21 file format hereinafter). Since information which is not described in the dictionary in the Part21 file format cannot be exchanged intact, if additional information is to be sent, an additional exchange process using an independent file, independent format, or the like is required. Hence, by adding information to Classification_Label using a TABLE_CONTENT entity of PLIB, the additional information can be exchanged without damaging the PLIB format and dictionary information, and without any influence.

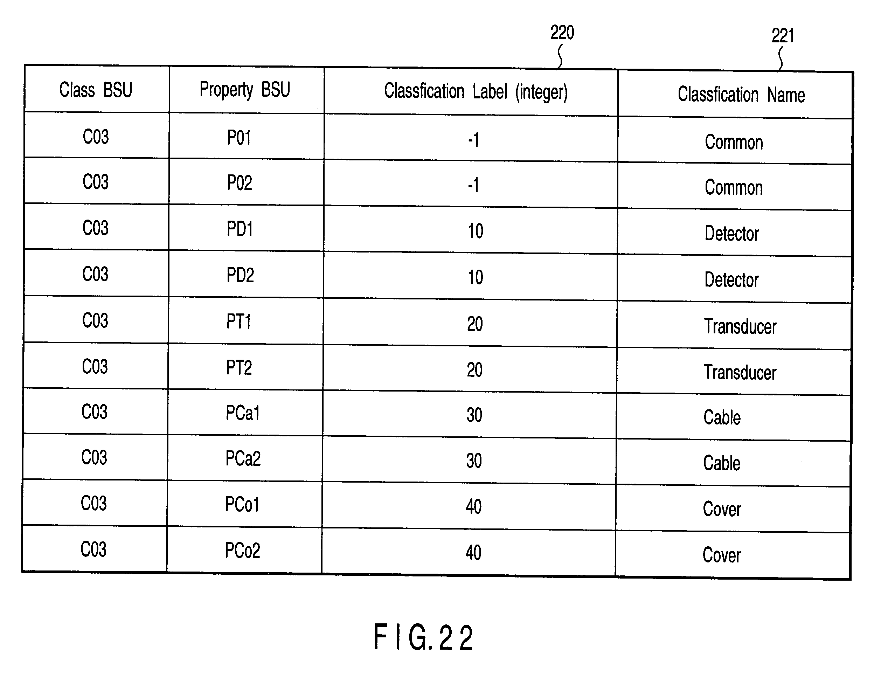

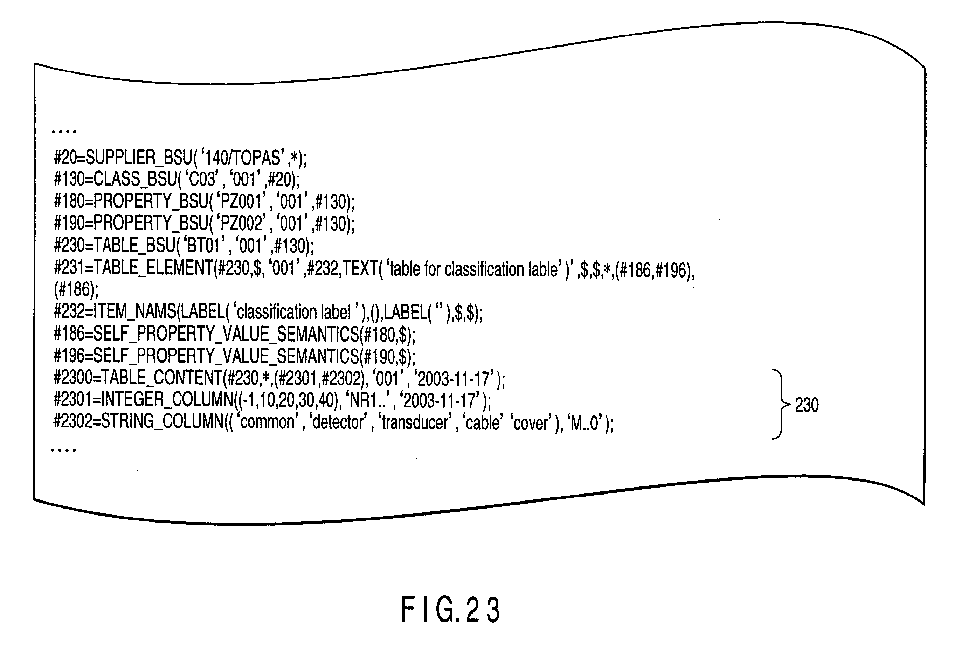

FIG. 22 shows an example in which Classification_Label is assigned to each property. Since each Classification_Label 220 assigned to each property is only a numerical value, a column 221 of ClassificationName shown in FIG. 22 cannot be added in a normal structure. FIG. 23 shows a structure 230 used to additionally assign ClassificationName using another table.

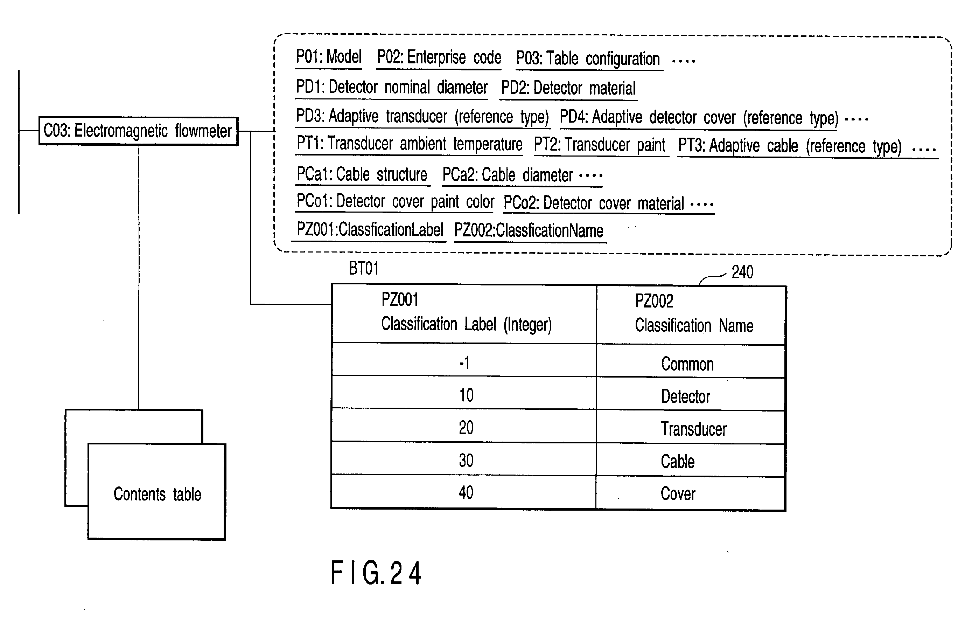

FIG. 24 shows an example that expresses information (that of FIG. 23) of Classification_Label using a TABLE_CONTENT entity. FIG. 24 describes only classification codes and corresponding names in a TABLE_CONTENT column 240, but the relationship among classification codes may be additionally described.

### <Another combination method of contents data>

After the values of property sets to be described for respective contents tables are finally specified, a combination process based on the combination of these values of property sets is to be executed. In this case, an inter-table JOIN operation of the relational database theory may be used in this combination process.

### <Full property description using one contents table>

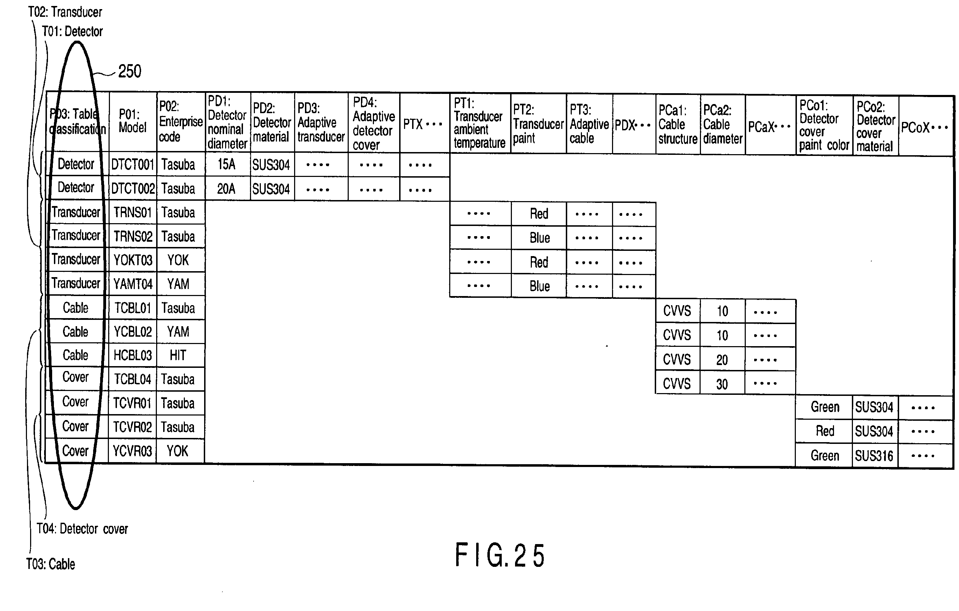

A table (spreadsheet) in a table format may be used as an input/output file to the hierarchical database to arrange all property sets, as shown in FIG. 25, and property values may be input/output to/from all contents tables 250 via the spreadsheet.

### <Property description divided for each individual contents table>

On the other hand, the spreadsheet may be associated with each individual contents table as an input/output file.

### <Facilitation of property selection of contents table>

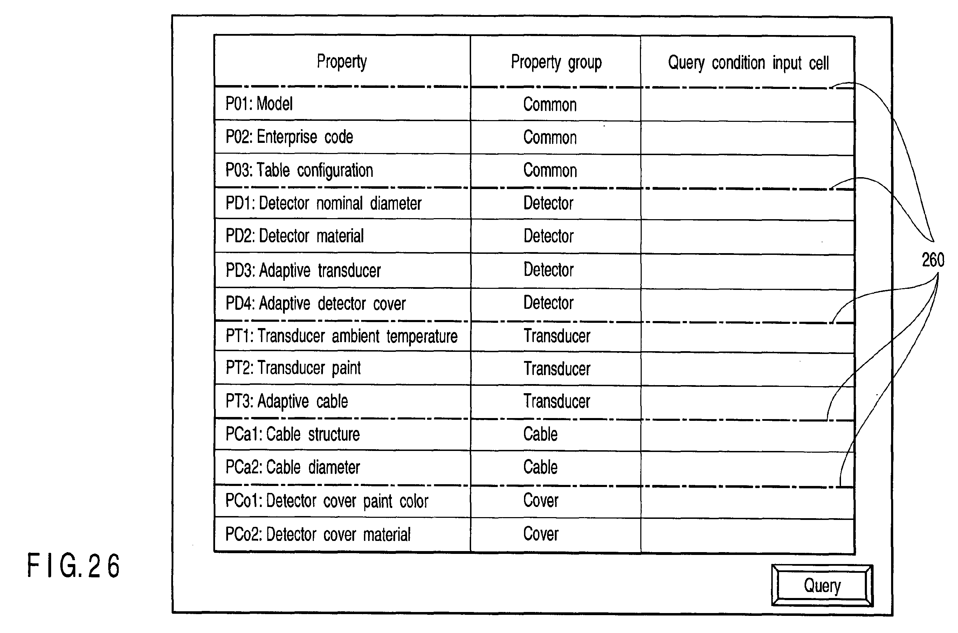

In selection by means of references among contents tables, it is preferable to facilitate determination of candidate rows in an advanced query process of rows of each contents table. That is, in order to facilitate selection of a property specific to a contents table which is to undergo the query process on a GUI used to input the query condition, and input of the query condition, the name or code of the divided property table is allowed to be easily input or selected on the GUI. More specifically, (i) a property specific to each divided property table among properties of a class is displayed to be distinguished from other properties using a background color, mark, or the like, (ii) properties specific to divided property tables are arranged, and they are distinctively displayed using boundary lines or background colors for respective divisions, (iii) properties specific to divided property tables are displayed on different pages or panels, (iv) only properties specific to respective divided property tables are displayed, and so forth. In this way, a property sort function is preferably provided to contents tables. For example, as shown in FIG. 26, input cells are separately displayed using one-dashed chain lines 260 for respective divided properties of properties on the window used to input the query condition of product data.

### <Narrowing down to a plurality of rows>

After reference, upon selection of rows on a contents table as a parent node, the selection result need not always be narrowed down to one row, but a plurality of rows may be allowed to be selected as a result of narrowing down. In this case, rows on a contents tables of child nodes to be referred to and selected by the (same) classinstance property in correspondence with the plurality of rows are divided into pages or the like, or are separately displayed on a single window or are displayed by marking (e.g., by changing colors, assigning the row numbers on the parent node, and so forth).

When a plurality of rows are selected on the parent node, since reference result rows are different for these selected rows, the system must clarify correspondence between the reference result rows and selected rows. A display example that associates a selected row as a reference source with a reference result row will be explained below. Assume that T02: transducer is a parent node, T03: cable is a child node to be referred to from the parent node, and a selection reference is made by describing the reference condition to a property PT3: adaptive cable.

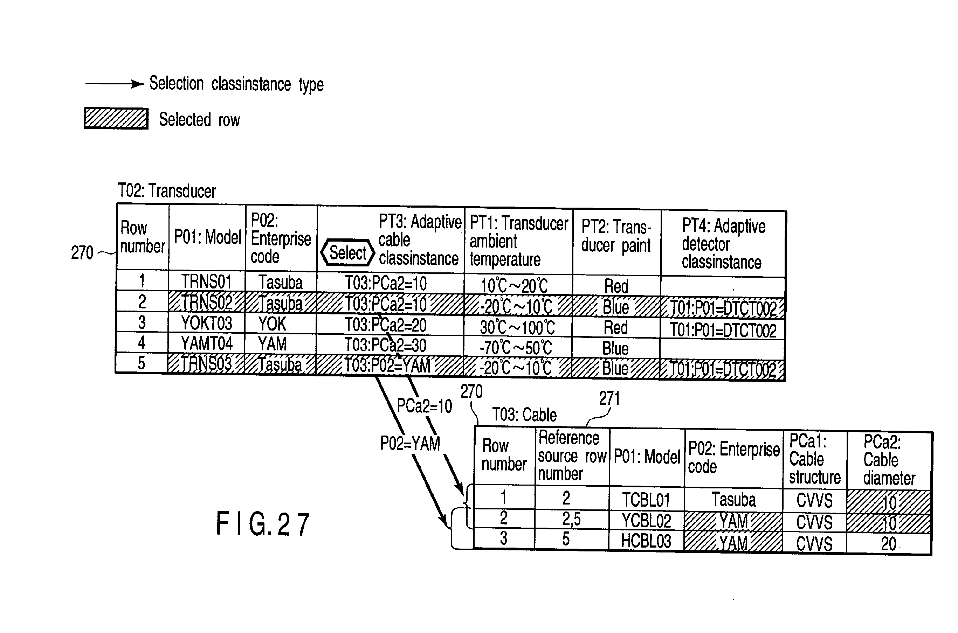

FIG. 27 shows an example wherein from which row of the parent node the reference result row is referred to is indicated by the row number (reference source row number) of the parent node. A row number column 270 used to identify contents in each table is appended to the left column of each of T02: transducer and T03: cable. When row numbers 2 and 5 of parent node T02: transducer are selected, since the reference condition from row number 2 to T03: cable is PCa2=10, row numbers 1 and 2 of T03: cable are selected as reference result rows. On the other hand, since the reference condition from row number 5 of T02 to T03 is P02=YAM, row numbers 2 and 3 of T03: cable are selected as reference row results.
T02: row number 2 → T03: row numbers 1 and 2
T02: row number 5 → T03: row numbers 2 and 3

In order to plainly display them to the user, a column 271 used to indicate a reference source row number is provided next to the row number column of T03 to display the row numbers of T02: transducer as a reference source here, thus allowing the user to easily recognize correspondence between the row number of the parent node and the reference result. That is, the reference source row numbers in T03 are 2 for row number 1, 2 and 5 for row number 2, and 5 for row number 3.

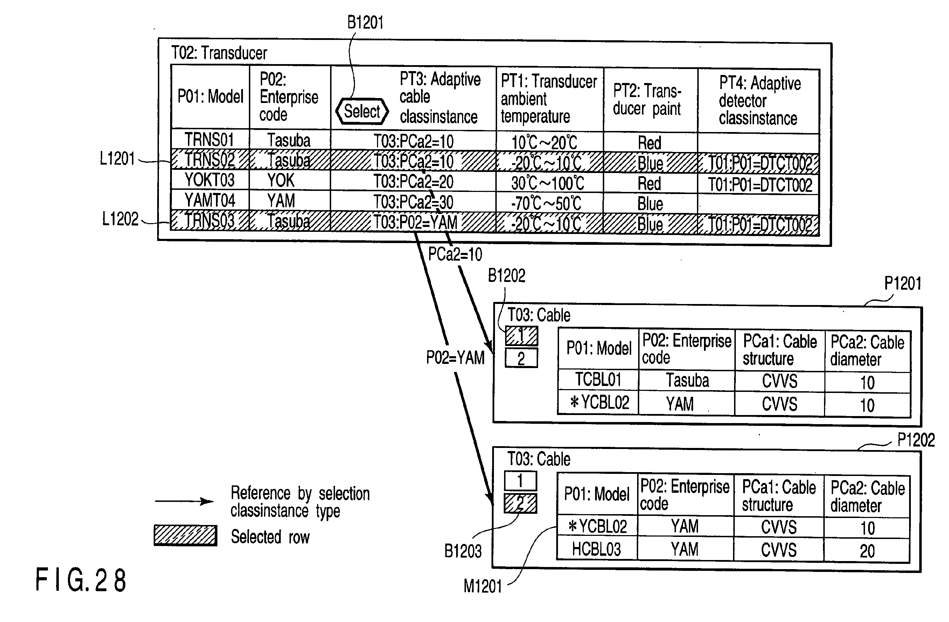

FIG. 28 shows an example wherein pages are separately displayed depending on from which row of the parent node a reference result row is referred to. For example, the user selects contents data L1201 and L1202 from rows of T02: transducer as selected rows. After this selection, in order to make a selection reference for a property PT03 of selection classinstance type, the user displays reference results by, e.g., clicking a button B1201. Note that the button B1201 is used to separately display the reference result rows for all the selected rows on pages (windows, frames) for respective selected rows.

The reference results are separately displayed on pages P1201 and P1202. In this case, the reference result page from L1201 is P1201, and that from L1202 is P1202. A plurality of windows of pages to be displayed as the reference results may be simultaneously displayed, as shown in FIG. 28, or respective reference result pages may be switched on a single window by preparing switch buttons B1202, B1203, and the like.

As for contents data which repetitively appear as reference results, i.e., contents data as reference result rows from a plurality of reference sources, an identification symbol such as a "*" mark or the like indicating repetition is preferably displayed.

### <Use of typical property>

A contents data editor who registers product data describes the selection reference condition from a parent node to a child node in principle. This selection reference condition is described by re-definition of a reference destination class (which must be a class below the reference destination class defined by the dictionary) and designation of sets of properties and property values. It is preferable to provide a mechanism that allows an superior user who defines the dictionary or the selection path in advance to teach a subordinate user about of which properties property values are to be set as the selection reference condition. In this way, the subordinate user can easily designate the reference condition, and can avoid designation of a wrong condition.

More specifically, of which properties property values are to be designated as the selection reference condition is given using the typical property mechanism, and appropriate query conditions (typical selection conditions which are set for property sets in advance) of a child node can be selected in correspondence with rows on the contents table as the parent node.

### <Automatic development (combination) of contents table>

All or some rows described on a contents table are selected, and all combinations based on such selection are automatically developed. A function of developing and generating all combined rows obtained as a result of development as tables or "views" of the relational database theory may be provided.

### <Guide using guide chart>

Individual processes of query (query processes) are symbolized using graphics, characters, images, symbols, and the like (query process symbols), and a query flowchart that couples query process symbols by arrows or the like is prepared. By marking the next query process to be selected by changing a background color, frame color, or the like or appending a symbol, process selection can be guided.

A query transition graph (to be generally referred to as a "guide chart" hereinafter) based on the tree structure or acyclic graph structure among contents tables is expressed on the basis of such query flowchart, and is presented to the user. A function of displaying a query GUI for each individual contents table when the user selects the query process symbols on the guide chart in turn using the mouse or the like can be provided.

A function of easily returning to a guide chart display window from all query processes in the overall query flow using a display menu, icon, or the like to the guide chart prepared on display of each individual guide table, and a function of allowing the user to graphically confirm the position and purpose of the current selection operation in the overall flow are preferably added.

Furthermore, the control is preferably made to generate a warning to the user or to inhibit the query process (the operation for narrowing down contents data from a reference destination contents table according to the reference condition) from being called when the user makes selection departing from the flow or when the right of access about that query process is not given to the user. Also, a function of returning, when the user selects the already determined query process on purpose, property value sets in contents tables that have already been selected in that query process and subsequent processes to undetermined states may be provided.

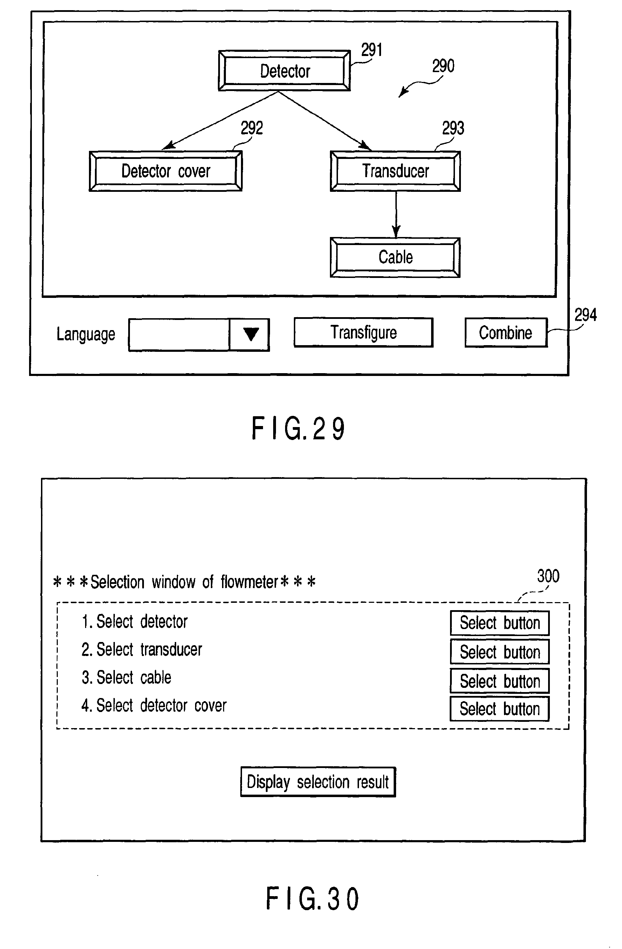

FIG. 29 shows a guide example using the guide chart. A selection tree is displayed an image 290 intact. Respective nodes correspond to reference result nodes. For example, when the user clicks a node "detector" 291, a corresponding start point contents table is displayed. Immediately after the guide chart is called, only the node as the start point is allowed to be selected. Upon completion of selection by narrowing down to one contents data in a contents table window as a start point, the user ca select next nodes "detector cover" 292 and "transducer" 293 of "detector" 291. Upon completion of selection of all the nodes by repeating similar selection, a combination button 294 is enabled. By clicking this combination button 294, the combination process is executed for all selected contents data.

When the guide process can be aborted in the middle of selection from the start point node, the combination button 294 is enabled after selection of at least one contents data is done, and the combination process is applied to selected data.

When the guide process can be aborted even in the middle of selection except for the start point node, the combination button 294 is enabled for only a node having the selected node as a parent. The selection path must be one continuous path.

FIG. 30 shows another guide example using the guide chart. Nodes of the selection tree are arranged as a list 300 without destroying their parent-child relationship. Since a sequence for advancing selection in turn from the upper to lower rows of the list is limited to one way, a GUI which can be easily operated by a beginner who selects a product can be provided compared to tree expression shown in FIG. 29.

Note that the specification has explained a hierarchical database that stores digital specification information and catalogue information of industrial products in the form of a hierarchical database, and components selection in that hierarchical database. However, the present invention may be applied to formation of a business process database, and can be used in an advanced query of components of a decision making process, control of business flow.

## Claims

1. A database apparatus **characterized by** comprising:
a table storage means for storing a first contents table which includes a plurality of first components which includes a plurality of first contents data rows, and a second contents table which includes a plurality of second components which includes a plurality of second contents data rows, wherein the first contents data rows and the second contents data rows each have a selection reference relationship between the first contents table and the second contents table, and a selection reference condition is described using a selection reference type property;
a display means for displaying the first contents table on a screen;
a designation means for designating a first contents data row in the first contents table displayed on the screen;
a first selection means for selecting the designated first contents data row;
a selection reference processor means for querying the second contents table under the selection reference condition to find candidates of second contents data rows, wherein the candidates are referenced from the selected first contents data row according to the selection reference relationship;
a second selection means for selecting at least one second contents data row designated by the designation means in the candidates displayed on the screen; and
a combination means for generating a combined contents table corresponding to a combined-type product, by combining the first and second contents data rows.

2. An apparatus according to claim 1, **characterized in that** the table storage means includes means for storing the first contents table and the second contents table in association with an identical class in a format of hierarchical database in which a subclass inherits properties of a superclass.

3. An apparatus according to claim 1, **characterized by** further comprising a selection path storage means for storing a selection path having a tree structure or an acyclic structure, used for guiding the selection reference to a user.

4. An apparatus according to claim 1, **characterized in that**:
the first contents table includes a first divided property table, and the first contents data rows represents values of property sets specific to the first components, and
**characterized in that**:
the second contents table includes a second divided property table, and the second contents data rows represents values of property sets specific to the second components.

5. An apparatus according to claim 1, **characterized in that** external standard codes including BSU codes are used to identify classes and properties of the first and second components.

6. An apparatus according to claim 4, **characterized by** further comprising:
an import means for importing properties using CaseOf from other classes to one of the first and second divided property tables, in addition to properties inherit by a parent-child inheritance relationship.

7. An apparatus according to claim 4, **characterized in that** a set of properties in one of the first and second divided property tables are defined using an extended classification label having additional information for grouping the set of properties.

8. An apparatus according to claim 1, **characterized in that** the combination means includes means for executing inter-table JOIN operation thereby to combine property values of the first and second contents data rows.

9. An apparatus according to claim 1, further comprising a typical property mechanism for causing the selection reference type property in the first contents table to inherit the selection reference condition from a superclass.

10. A components selection method in hierarchical database **characterized by** comprising:
storing a first contents table which includes a plurality of first components which includes a plurality of first contents data rows, and a second contents table which includes a plurality of second components which includes a plurality of second contents data rows, wherein the first contents data rows and the second contents data rows each have a selection reference relationship between the first contents table and the second contents table, and a selection reference condition is described using a selection reference type property;
displaying the first contents table on a screen;
designating a first contents data row in the first contents table displayed on the screen;
selecting the designated first contents data row;
querying the second contents table under the selection reference condition to find candidates of second contents data rows, wherein the candidates are referenced from the selected first contents data row according to the selection reference relationship;
selecting at least one second contents data row in the candidates displayed on the screen; and
generating a combined contents table corresponding to a combined-type product, by combining the first and second contents data rows.

11. A method according to claim 10, **characterized in that** the first contents table and the second contents table are stored in association with an identical class in a format of hierarchical database in which a subclass inherits properties of a superclass.

12. A method according to claim 10, **characterized by** further comprising storing a selection path having a tree structure or an acyclic structure; and
guiding the selection reference to a user according to the selection path.

13. A method according to claim 10, **characterized in that**:
the first contents table includes a first divided property table, and the first contents data rows represents values of property sets specific to the first components, and
**characterized in that**:
the second contents table includes a second divided property table, and the second contents data rows represents values of property sets specific to the second components.

14. A method according to claim 10, **characterized by** further comprising using external standard codes including BSU codes to identify classes and properties of the first and second components.

15. A method according to claim 13, **characterized by** further comprising:
importing properties using CaseOf from other classes to one of the first and second divided property tables, in addition to properties inherit by a parent-child inheritance relationship.

16. A method according to claim 13, **characterized in that** a set of properties in one of the first and second divided property tables are defined using an extended classification label having additional information for grouping the set of properties.

17. A method according to claim 10, **characterized in that** the combining comprises:
executing inter-table JOIN operation thereby to combine property values of the first and second contents data rows.

18. A method according to claim 10, **characterized by** further comprising inheriting the selection reference condition to the selection reference type property in the first contents table from a superclass.

19. A components selection program stored in a computer readable medium, the program **characterized by** comprising:
means for instructing a computer to store a first contents table which includes a plurality of first components which includes a plurality of first contents data rows, and a second contents table which includes a plurality of second components which includes a plurality of second contents data rows, wherein the first contents data rows and the second contents data rows each have a selection reference relationship between the first contents table and the second contents table, and a selection reference condition is described using a selection reference type property;
means for instructing the computer to display the first contents table on a screen;
means for instructing the computer to designate a first contents data row in the first contents table displayed on the screen;
means for instructing the computer to select the designated first contents data row;
means for instructing the computer to query the second contents table under the selection reference condition to find candidates of second contents data rows, wherein the candidates are referenced from the selected first contents data row according to the selection reference relationship;
means for instructing the computer to select at least one second contents data row in the candidates displayed on the screen; and
means for instructing the computer to generate a combined contents table corresponding to a combined-type product, by combining the first and second contents data rows.
